# EUROPEAN PATENT SPECIFICATION

(11) **EP 4 056 818 B1**
(45) Date of publication and mention of the grant of the patent: **22.11.2023**
(21) Application number: 22159026.8
(22) Date of filing: 25.02.2022
(51) Int. Cl.: F01N 3/025, F01N 3/20

(54) **HEATING DEVICE FOR AN EXHAUST SYSTEM OF AN INTERNAL COMBUSTION ENGINE**
HEIZVORRICHTUNG FÜR EIN AUSPUFFSYSTEM EINES VERBRENNUNGSMOTORS
DISPOSITIF DE CHAUFFAGE D'UN SYSTÈME D'ÉCHAPPEMENT D'UN MOTEUR À COMBUSTION INTERNE

(30) Priority: 26.02.2021 IT 202100004577
(43) Date of publication of application: 14.09.2022
(73) Proprietor: Marelli Europe S.p.A., 20011 Corbetta (MI) (IT)
(72) Inventor: LA SANA, Marco, 10137 TORINO (IT); MILANI, Emanuele, 13876 SANDIGLIANO (BI) (IT); BRIGNONE, Mauro, 10124 TORINO (IT); LUBRANO, Luigi, 28100 NOVARA (IT)
(74) Representative: Studio Torta S.p.A.

(56) References cited:
- EP-A1- 0 590 699
- EP-A1- 2 387 656
- EP-A1- 4 036 384
- EP-A2- 2 466 207
- JP-A- 2005 180 371
- US-A- 4 571 938
- US-A1- 2011 289 906

## Description

### TECHNICAL FIELD

This invention relates to a heating device for an exhaust system of an internal combustion engine.

### PRIOR ART

An exhaust system of an internal combustion engine comprises an exhaust duct along which at least one exhaust gas treatment device, for gases coming from the internal combustion engine, is installed; in particular, it always includes a (oxidation or reduction) catalytic converter to which a particulate filter can be added. In order to operate (i.e., to carry out catalytic conversion), the catalytic converter needs to operate at a relatively high operating temperature (a modern catalytic converter operates at temperatures close to even 800°C) since the chemical conversion reactions of unburned hydrocarbons, nitrogen oxides, and carbon monoxide into carbon dioxide, water, and nitrogen only occur once the operating temperature has been reached.

During a cold start-up (i.e., when the internal combustion engine is switched on after an extended stop due to which the temperature of the various components of the internal combustion engine has reached ambient temperature), the temperature of the catalytic converter remains, for a relatively long time (even some minutes in winter and during a city route along which the internal combustion engine always runs at the minimum, or almost) far below the operating temperature. As a result, during the cold start-up, i.e., during the period in which the catalytic converter has not yet reached its operating temperature, the polluting emissions coming out are high because the purification effect of the catalytic converter is null or it is, at least, very ineffective.

To reach the operating temperature of the catalytic converter more quickly, the patents EP0631039A1, WO2012139801A1, and US8006487B2 propose installing a heating device along the exhaust duct, which, by burning fuel, generates a (very) hot air flow flowing through the catalytic converter. In particular, the heating device comprises a combustion chamber that is connected at the outlet to the exhaust duct (immediately upstream of the catalytic converter) and is connected at the inlet to a fan that generates an air flow flowing through the combustion chamber. In the combustion chamber, a fuel injector, which injects fuel that is mixed with air, and a spark plug, which cyclically strikes sparks to ignite the air-fuel mixture so as to obtain the combustion heating the air, are also arranged.

In the known heating devices, fuel combustion is not always complete in all the operating conditions and, thus, it may occur (particularly when a great quantity of fuel is injected in order to develop a great amount of heat) that the unburned fuel reaches the exhaust duct and burns inside the exhaust duct, leading, locally, to sudden increases in temperature, which are neither expected nor desired.

The patent US20110289906A1 describes a system for controlling the temperature of an exhaust flow of an internal combustion engine upstream of an exhaust gas post-treatment device. Also document EP4036384A1 (document according to Art.54(3) EPC) discloses a heating device.

### DESCRIPTION OF THE INVENTION

The purpose of this invention is to provide a heating device for an exhaust system of an internal combustion engine, which makes it possible to obtain, in all operating conditions, complete combustion of the fuel (i.e., without injecting unburned fuel into the exhaust duct) and, in addition, which is easy and inexpensive to produce.

According to this invention, a heating device for an exhaust system of an internal combustion engine is provided, according to what is claimed in the attached claims.

The claims describe preferred embodiments of this invention forming an integral part of this description.

### BRIEF DESCRIPTION OF THE DRAWINGS

This invention will now be described with reference to the attached drawings, which illustrate some non-limiting embodiments thereof, in which:
- Figure 1 is a schematic and partial view of an exhaust system of an internal combustion engine provided with a heating device produced in accordance with this invention;
- Figures 2 and 3 are two different longitudinal cross-section views with parts removed for clarity of the heating device in Figure 1;
- Figures 4 and 5 are two different views on an enlarged scale of details in Figure 2;
- Figure 6 is a schematic view in cross-section of the heating device in Figure 1;
- Figures 7 and 8 are two schematic views of two respective embodiments of a detail of the heating device in Figure 1;
- Figures 9 and 10 are two schematic views of alternative embodiments of a spray of fuel generated by a fuel injector of the heating device in Figure 1;
- Figure 11 is a schematic view of a spark plug of the heating device in Figure 1;
- Figure 12 is a schematic view of the electrodes of the spark plug in Figure 11 with the possible directions of a fuel spray emitted by a fuel injector highlighted;
- Figures 13 and 14 are two schematic views of alternative embodiments of the electrodes of the spark plug in Figure 11 with the possible directions of a fuel spray emitted by a fuel injector highlighted; and
- Figure 15 is an enlarged view of a detail in Figure 2 according to an additional embodiment.

### PREFERRED EMBODIMENTS OF THE INVENTION

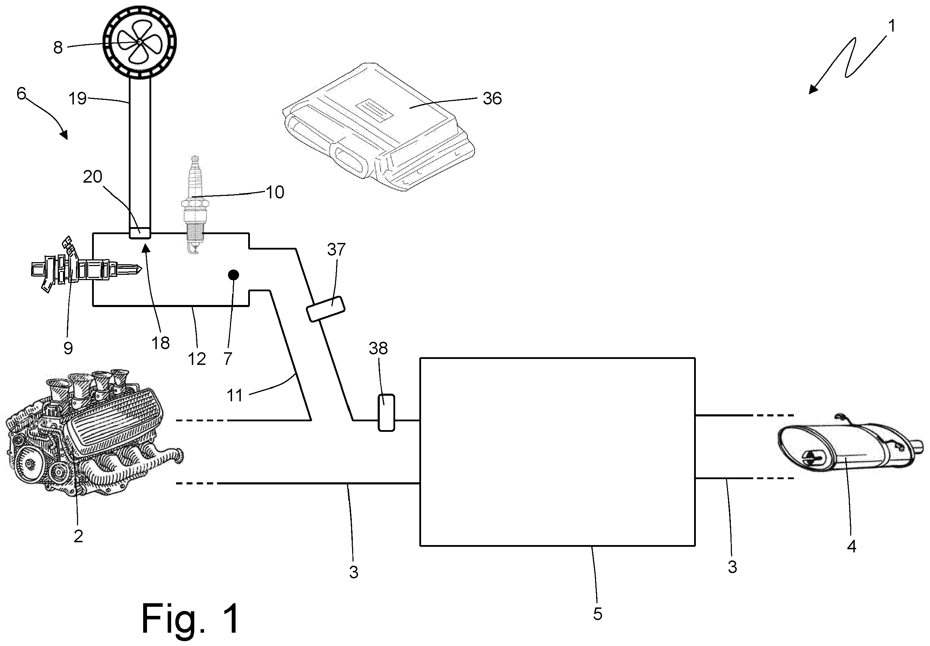

In Figure 1, reference number 1 denotes, as a whole, an exhaust system of an internal combustion engine 2.

The exhaust system 1 comprises an exhaust duct 3, which originates from an exhaust manifold of the internal combustion engine 2 and ends in a silencer 4, from which exhaust gases are released into the atmosphere. Along the exhaust duct 3, at least one exhaust gas treatment device 5, for gases coming from the internal combustion engine, is installed; in particular, it always includes a (oxidation or reduction) catalytic converter to which a particulate filter can be added. In order to operate (i.e., to carry out catalytic conversion), the catalytic converter needs to operate at a relatively high operating temperature (a modern catalytic converter operates at temperatures close to even 800°C) since the chemical conversion reactions of unburned hydrocarbons, nitrogen oxides, and carbon monoxide into carbon dioxide, water, and nitrogen only occur once the operating temperature has been reached.

In order to heat up the treatment device 5 more quickly, i.e., to enable the treatment device 5 to more quickly reach its operating temperature, the exhaust system 1 comprises a heating device 6 that, by burning fuel, generates a (very) hot air flow passing through the treatment device 5.

The heating device 6 comprises a combustion chamber 7 that is connected at the outlet to the exhaust duct 3 (immediately upstream of the treatment device 5) and is connected at the inlet to a fan 8 (i.e. to an air pump) that generates an air flow crossing the combustion chamber 7; in the combustion chamber 7, a fuel injector 9, which injects fuel that is mixed with air, and a spark plug 10, which cyclically strikes sparks to ignite the air-fuel mixture so as to obtain combustion that heats the air, are arranged. The combustion chamber 7 of the heating device 6 ends in an outlet duct 11 that is engaged in the exhaust duct 3 (immediately upstream of the treatment device 5).

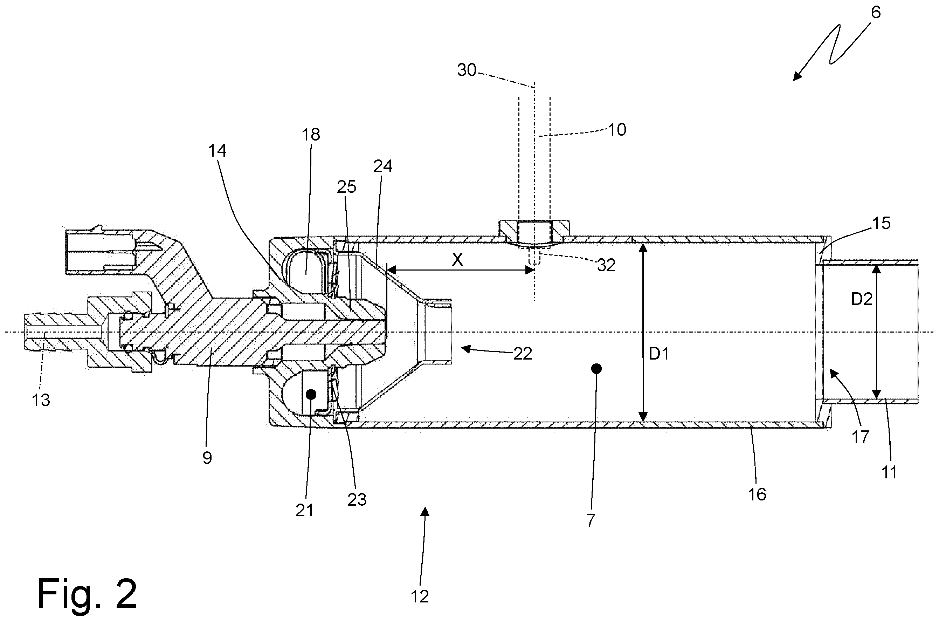

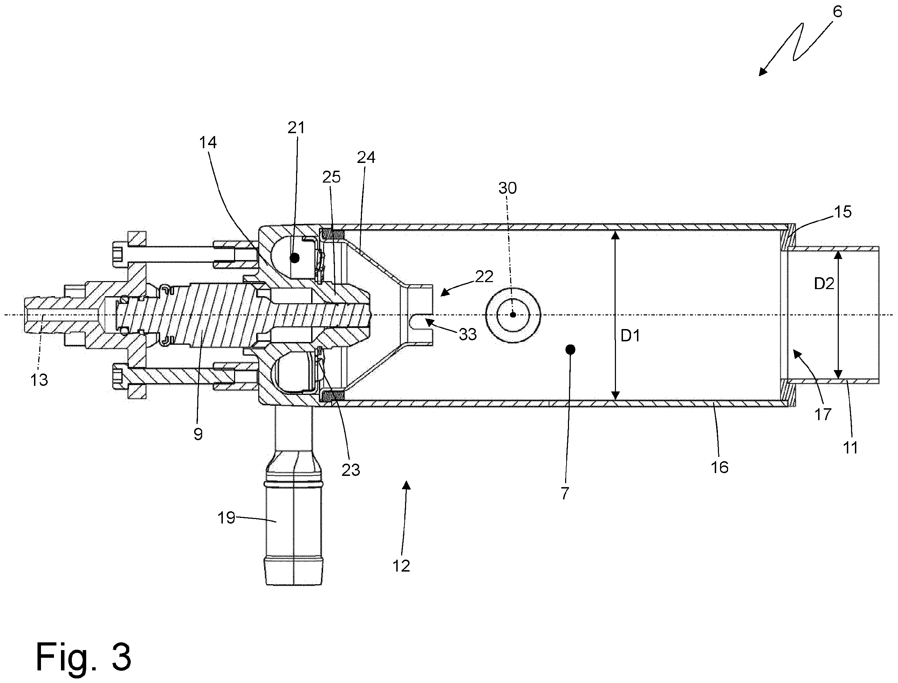

According to what is illustrated in Figures 2 and 3, the heating device 6 comprises a tubular body 12 (for example, cylindrical in shape and having a circular or elliptical cross-section) having a longitudinal axis 13; the tubular body 12 is delimited, at its two ends, by two base walls 14 and 15, which are opposite to each other, and is delimited, on the side, by a side wall 16 that connects the two base walls 14 and 15 together. The base wall 14 has a central hole to house the fuel injector 9 that is mounted coaxially to the tubular body 12 (i.e., coaxially to the longitudinal axis 13); in other words, the fuel injector 9 is mounted through the base wall 14 of the tubular body 12 to inject fuel into the combustion chamber 7.

Similarly, the base wall 15 has a central hole to engage with the outlet duct 11 ending in the exhaust duct 3; in other words, the base wall 15 has an outlet opening 17 for hot air from the combustion chamber 7 from which the outlet duct 11 originates.

According to what is illustrated in Figures 2 and 3, through the tubular body 12, (at least) one inlet opening 18 is formed that is connected to the fan 8 via an inlet duct 19 (illustrated in Figures 1 and 3) to receive an air flow that is directed into the combustion chamber 7 and mixes with the fuel injected by the fuel injector 9. Preferably, the air enters the inlet opening 18 with a flow oriented tangentially (in relation to the tubular body 12), i.e., the inlet duct 19 is oriented tangentially (in relation to the tubular body 12).

According to a possible (but not binding) embodiment illustrated in Figure 1, at the inlet opening 18 a check valve 20 is arranged only allowing air to flow towards the combustion chamber 7 (i.e., entering the tubular body 12). The check valve 20 is preferably passive (i.e., it does not comprise electric, hydraulic, or pneumatic actuators that generate movement), is controlled under pressure, and only opens when pressure upstream of the check valve 20 is greater than the pressure downstream of the check valve 20. When the heating device 6 is not being used (thus, when the fan 8 is switched off), the check valve 20 functions to prevent exhaust gases from going back up until they leave the inlet opening 18 and, thus, from dispersing into the environment without passing through the treatment device 5. Alternatively, the check valve 20 may be assembled upstream along the outlet duct 11, for example, at the outlet opening 17; in this case, the check valve 20 only allows an air flow leaving the combustion chamber 7 (leaving the tubular body 12) towards the exhaust duct 3, i.e., it prevents a flow of exhaust gases from the exhaust duct 3 towards the combustion chamber 7 (entering the tubular body 12).

According to what is illustrated in Figures 2 and 3, the heating device 6 comprises a feeding channel 21 that receives air from the inlet opening 18, surrounds an end portion of the fuel injector 9, and ends in a nozzle 22, which is arranged around an injection point of the fuel injector 9 (i.e., around a nose of the fuel injector 9 from which fuel comes out).

The spark plug 10 is assembled through the side wall 16 of the tubular body 12 to trigger the combustion of a mix of air and fuel that is generated due to the effect of mixing air, which enters the tubular body 12 from the inlet opening 18 and is injected into the combustion chamber 7 by the nozzle 22 of the feeding channel 21, and fuel, which is injected into the combustion chamber 7 by the fuel injector 9. In particular, the side wall 16 of the tubular body 12 has a through hole oriented radially (i.e., perpendicularly to the longitudinal axis 13) inside of which the spark plug 10 (which is obviously oriented radially) is fixed (i.e., screwed).

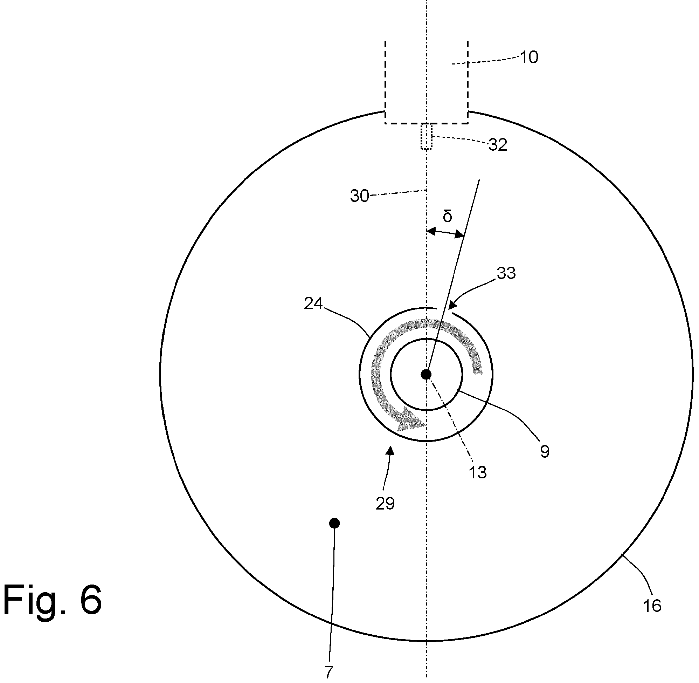

The heating device 6 comprises a static mixer 23 (i.e., without moving parts), which is shaped like an annulus, is arranged along the feeding channel 21, and around the fuel injector 9, and is configured to generate turbulence, in particular a (rotary) swirling motion, in the air flowing towards the nozzle 22. According to what is illustrated in Figure 6, the static mixer 23 is configured to generate a (rotary) swirling motion in the air flowing towards the nozzle 22 that has a certain rotation direction around the longitudinal axis 13 (i.e., a clockwise direction or anticlockwise direction around the longitudinal axis 13). In the embodiment illustrated in the attached figures, and as represented in detail in Figure 6, the static mixer 23 is configured to generate a (rotary) swirling motion in the air flowing towards the nozzle 22 that has an anticlockwise direction looking from the base wall 15 (i.e., a clockwise direction looking from the base wall 14).

According to a preferred, but not binding, embodiment illustrated in Figures 2 and 3, downstream of the static mixer 23, the feeding channel 21 has a cross-section that progressively diminishes so that it determines an increase in the air's speed. In particular, downstream of the static mixer 23, the feeding channel 21 has an initial portion having a constant cross-section, an intermediate portion having a progressively diminishing cross-section, and a final portion having a constant cross-section up until the nozzle 22.

The feeding channel 21 is delimited, on the outside, by an outer tubular body 24 (at least partially conical) and is delimited, on the inside, by an inner tubular body 25 (at least partially conical) surrounding the fuel injector 9 and containing, inside, the fuel injector 9 (i.e., it acts as a container for the end part of the fuel injector 9). In other words, the feeding channel 21 is defined between the inner tubular body 25 and the outer tubular body 24. In particular, the two tubular bodies 24 and 25 alternate conical portions (i.e., which have a converging form that progressively decreases in size along the longitudinal axis 13) with cylindrical portions (i.e., which have a shape with a constant size along the longitudinal axis 13); preferably, the end part of the inner tubular body 25 converges and tapers (i.e., it progressively reduces its size towards the nozzle 22) while the end part of the outer tubular body 24 has a cylindrical form.

According to a preferred embodiment, the air enters the feeding channel 21 with a flow oriented tangentially so as to have a (rotary) swirling progression that is successively increased by the action of the static mixer 23 and encourages its mixing with the fuel that is injected by the fuel injector 9. In other words, the injection of the comburent air inside the combustion chamber 7 through a duct tangentially directed to the combustion chamber 7 makes it possible to give a circular motion to the comburent air flow (additionally emphasised by the presence of the static mixer 23) so as to optimise the air/fuel mixing inside the combustion chamber 7.

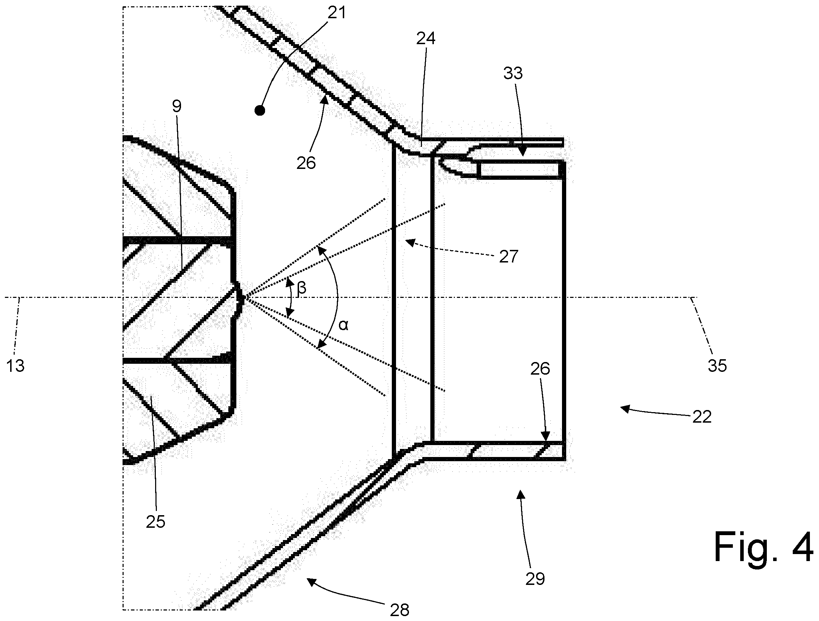

According to what is illustrated in Figure 4, the fuel injector 9 is configured to spray at least 80% (and preferably at least 90-95%) of the fuel against an inner surface 26 of the feeding channel 21. In other words, the fuel injector 9 does not direct the fuel directly outside the feeding channel 21, but, instead, directs the fuel against the inner surface 26 of the feeding channel 21 so that the fuel that comes out of the fuel injector 9 first hits the inner surface 26 before exiting the feeding channel 21 through the nozzle 22. The impact of the fuel against the inner surface 26 makes it possible to very effectively pulverise the fuel drops emitted by the fuel injector 9 and, in this way, the mixing of fuel with air, which flows along the feeding channel 21, is markedly improved. An improvement in the mixing of air and fuel ensures an optimal combustion and, above all, complete combustion of the fuel, avoiding, thus, that part of the unburned fuel could leave the combustion chamber 7.

According to a preferred embodiment, the fuel injector 9 is configured to emit a fuel spray (jet) 27 having a conical shape hollow at the centre, i.e., which has a cross-section that is shaped like an annulus wherein the fuel is concentrated around the edges. In particular, according to the embodiment illustrated in Figure 4, an outer surface of the fuel spray 27 has an opening angle α of approximately 70° (for example, ranging between 65° and 75°) and an inner surface of the fuel spray 27 has an opening angle β of approximately 50° (for example, ranging between 45° and 55°). In other words, the fuel injector 9 generates a fuel spray 27 having a conical shape (with the vertex of the cone arranged near the injection nozzle) and having, in the centre, a hole (i.e., an area without fuel), which is also conical (with the vertex of the cone arranged near the injection nozzle). Thus, the fuel spray 27 generated by the fuel injector 9 has the shape of a conical skirt due to the effect of the central hole, i.e., it has an internally hollow conical shape.

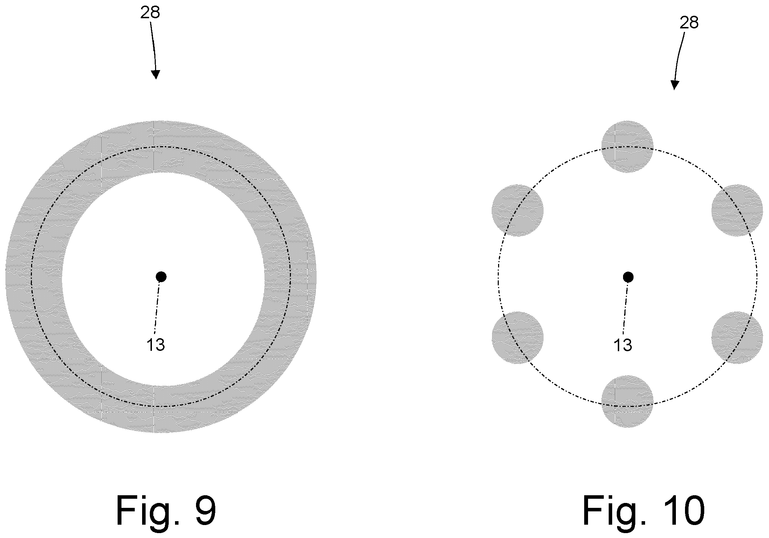

It is important to observe that, when it is said that the fuel spray 27 generated by the fuel injector 9 has the shape of a conical skirt (i.e., it has an internally hollow shape), it is meant that the large majority of the fuel coming out of the fuel injector 9 is distributed in the space inside a conical skirt, but a small (residual) part of the fuel may be distributed differently. In addition, according to how the outlet opening of the fuel is produced, the fuel spray 27 coming out of the fuel injector 9 may have a more symmetrical distribution around the longitudinal axis 13 (as illustrated in Figure 9) i.e., a less symmetrical distribution around the longitudinal axis 13 (as illustrated in Figure 10). In particular, the fuel spray 27 coming out of the fuel injector 9 has the shape illustrated in Figure 9 when the fuel injector 9 is a "swirl" injector, while the fuel spray 27 coming out of the fuel injector 9 has the shape illustrated in Figure 10 when the fuel injector 9 is a "multi hole" injector (in Figure 10, there is a "multi hole" fuel injector 9 with six outlet holes, but the number of outlet holes could be different).

According to a preferred embodiment, the fuel injector 9 is a "swirl" injector, i.e., it gives the injected fuel a rotary swirling motion (i.e., a swirling motion in which the fuel rotates around the longitudinal axis 13 of the tubular body 12); the rotation direction that the fuel injector 9 gives the fuel is of the "swirl" type and concords with (i.e., is equal to) the rotation direction that the static mixer 23 gives.

As said above, the feeding channel 21 is delimited, on the outside, by the outer tubular body 24 (having the inner surface 26 of the feeding channel 21) and is delimited, on the inside, by the inner tubular body 25, which surrounds the fuel injector 9 and contains, on the inside, the fuel injector 9.

According to what is illustrated in Figure 4, the outer tubular body 24 comprises a conical portion 28 that reduces in size towards the nozzle 22; in addition, according to a preferred embodiment illustrated in the attached figures, the outer tubular body 24 also comprises a cylindrical portion 29 that is arranged downstream of the conical portion 28 and ends in the nozzle 22. According to a different embodiment not illustrated, the outer tubular body 24 does not have a cylindrical portion 29 and, thus, only comprises the conical portion 28. According to an additional embodiment not illustrated, the cylindrical portion 29 could be replaced by an additional conical portion that tapers (converges) less than the tapering (convergence) of the conical portion 28.

In the embodiment illustrated in the attached figures, the fuel injector 9 is configured to spray at least part of the fuel against the cylindrical portion 29 (or against the additional conical portion) of the outer tubular body 24; in particular, the fuel injector 9 is configured to spray the majority (almost all) the fuel against the cylindrical portion 29 (or against the additional conical portion) of the outer tubular body 24. According to a different embodiment, the fuel injector 9 is configured to spray at least part of the fuel against the cylindrical portion 29 (or against the additional conical portion) of the outer tubular body 24 and at least part of the fuel against the conical portion 28 of the outer tubular body 24; for example, the fuel injector 9 is configured to spray approximately half of the fuel against the conical portion 28 of the outer tubular body 24 and approximately half of the fuel against the cylindrical portion 29 (or against the additional conical portion) of the outer tubular body 24. According to an additional embodiment, the fuel injector 9 is configured to spray at least part of the fuel against the conical portion 28 of the outer tubular body 24; in particular, the fuel injector 9 is configured to spray the majority (almost all) the fuel against the conical portion 28 of the outer tubular body 24.

According to what is illustrated in Figure 2, an axial distance X (i.e. measured along the longitudinal axis 13 of the tubular body 12) between the nose of the fuel injector 9 from which the fuel comes out (i.e. the injection point of the fuel injector 9) and a longitudinal axis 30 of the spark plug 10 ranges between 33% and 100% of an inner diameter D1 of the tubular body 12 (i.e. of the diameter D1 of the combustion chamber 7); preferably, the axial distance X ranges between 50% and 100% of the inner diameter D1 of the tubular body 12 and, in particular, the axial distance X ranges between 60% and 90% of the inner diameter D1 of the tubular body 12. It is important to observe that, preferably, the tubular body 12 has a circular cross-section and, thus, there are no doubts regarding how the inner diameter D1 of the tubular body 12 is measured in order to evaluate the axial distance X; if, on the other hand, the tubular body 12 has an elliptical cross-section, then the greatest dimension would be considered as the inner diameter D1 of the tubular body 12 in order to evaluate the axial distance X.

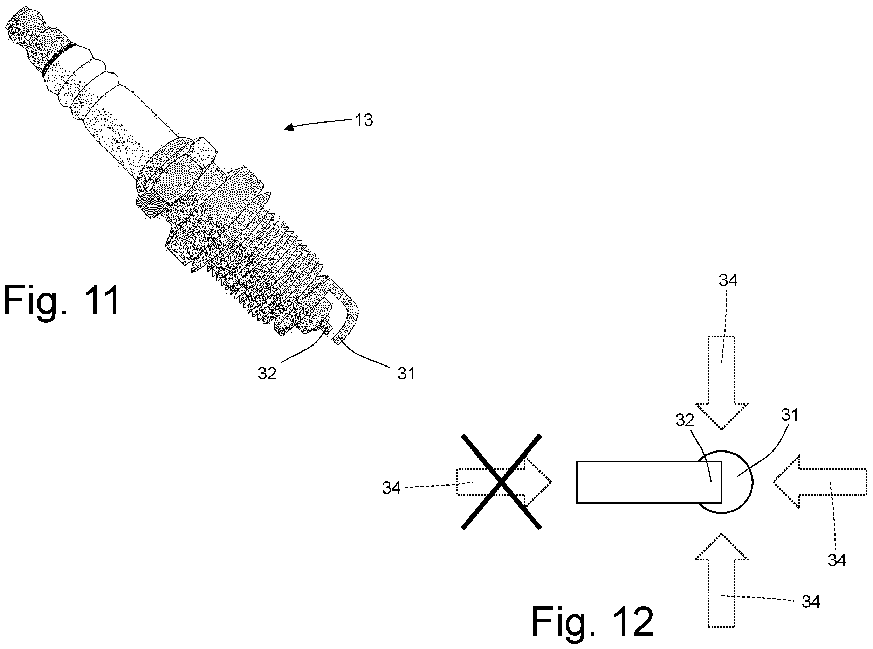

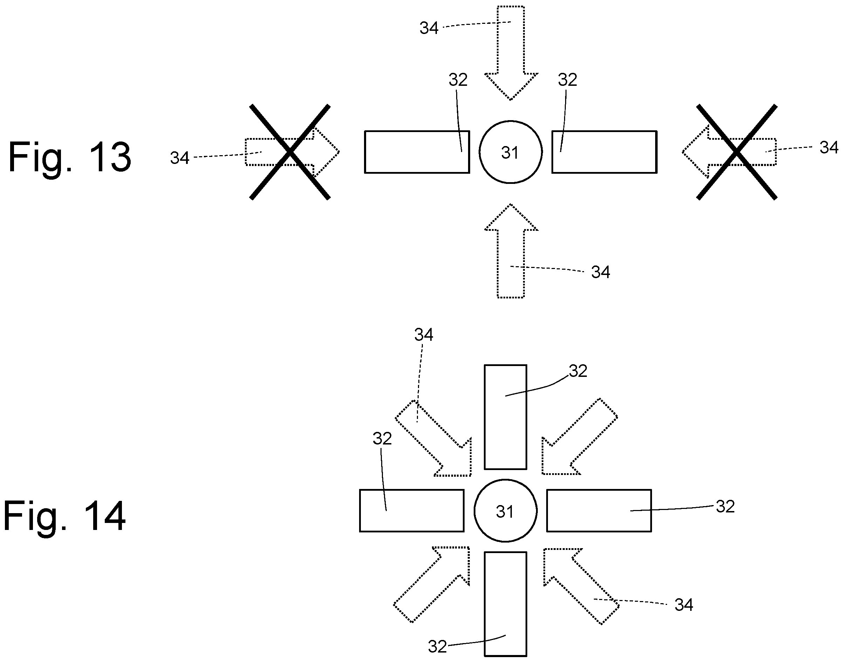

According to what is illustrated in Figures 11 and 12, the spark plug 10 has a single inner electrode 31 and a single outer electrode 32; according to variants illustrated in Figures 13 and 14, the spark plug 10 has a single inner electrode 31 and two outer electrodes 32 (Figure 13) or a single inner electrode 31 and four outer electrodes 32 (Figure 14); according to an additional variant not illustrated, there could be three outer electrodes 32.

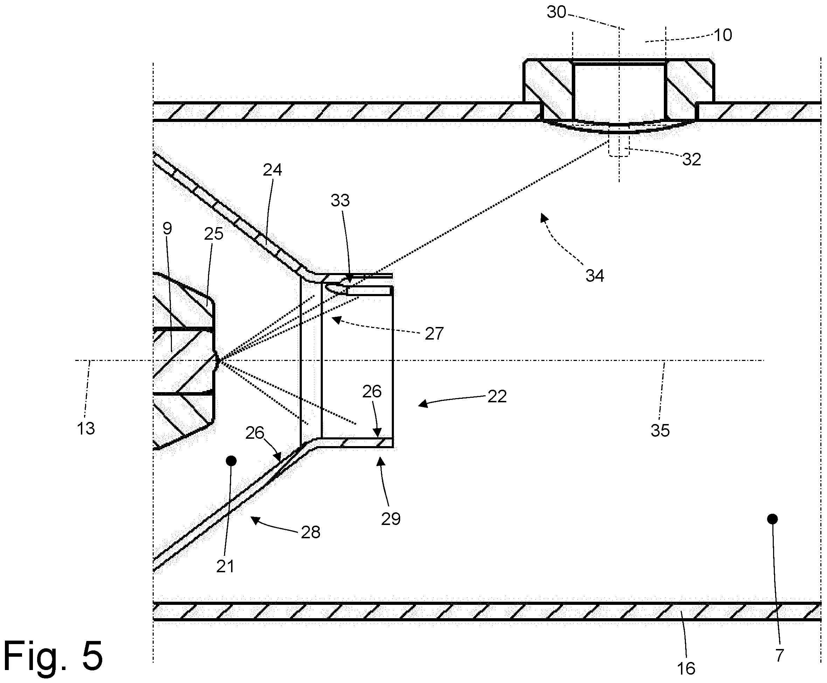

According to what is illustrated in Figure 5, the outer tubular body 24 has a through opening 33 (i.e., a slit) through which the nose of the fuel injector 9, from which the fuel comes out (i.e., the injection point of the fuel injector 9), "sees" the electrodes 31 and 32 of the spark plug 10. Thanks to the presence of the through opening 33, a limited part 34 of the fuel spray 27 emitted by the fuel injector 9, does not hit the outer tubular body 24, but flows through the outer tubular body 24 in order to directly reach the electrodes 31 and 32 of the spark plug 10. In other words, thanks to the presence of the through opening 33, the limited part 34 of the fuel spray 27 directly "wets" the electrodes 31 and 32 of the spark plug 10 to create, around the electrodes 31 and 32 of the spark plug 10, a localised excess of fuel (i.e., a locally richer mix) that encourages flame ignition and, thus, encourages the flame's quick propagation to all the rest of the mix. In other words, the fuel injector 9 is configured to spray at least part of the fuel against the outer tubular body 24, and the outer tubular body 24 has a through opening 33 through which a limited part 34 of the fuel spray 27 emitted by the fuel injector 9, instead of hitting the outer tubular body 24, flows through the outer tubular body 24 in order to reach the electrodes 31 and 32 of the spark plug 10.

As said earlier, the static mixer 23 is configured to generate, in the air flowing towards the nozzle 22, a (rotary) swirling motion that has a certain rotation direction around the longitudinal axis 13 of the tubular body 12. According to the embodiment according to the invention better illustrated in Figure 6, the through opening 33 is moved circumferentially in the opposite direction to the rotation direction of the air given by the static mixer 23 in relation to an ideal line connecting an injection point of the injector 9 with the electrodes 31 and 32 of the spark plug 10. In other words, the through opening 33 is arranged spatially "in advance" to compensate for the rotary motion component given by the static mixer 23 (to which one can also add the action of the "swirl" fuel injector 9) so that the limited part 34 of the fuel spray 27, which flows through the outer tubular body 24 passing into the through opening 33, effectively reaches (i.e., a maximum part thereof) the electrodes 31 and 32 of the spark plug 10.

In other words, the through opening 33 is arranged circumferentially "in advance" in relation to the axial alignment between the injection point of the injector 9 and the electrodes 31 and 32 of the spark plug 10 in order to compensate for the fuel's circumferential motion component.

According to a preferred embodiment, a middle plane of the through opening 33 forms an advance angle δ other than zero ranging generally between 5° and 30°, and is preferably 15°, with an ideal line that connects the injection point of the injector 9 with the electrodes 31 and 32 of the spark plug 10.

According to a different example not according to the invention and not illustrated, it is also possible to decide not to compensate for the rotary motion given by the static mixer 23 (to which one can also add the action of the "swirl" fuel injector 9) and, thus, the through opening 33 is arranged along the ideal line that connects an injection point of the injector 9 with the electrodes 31 and 32 of the spark plug 10 (i.e., the advance angle δ is null).

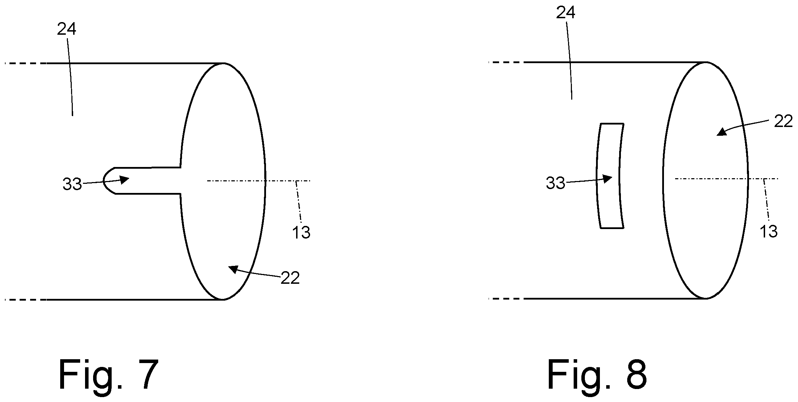

According to a preferred embodiment illustrated in Figures 2-5 and 7, the through opening 33 is shaped like a slit (i.e., it has an elongated shape wherein one dimension is greater than the other) and is oriented axially; as a result, the through opening 33 has a circumferential dimension that is smaller than its axial dimension (the circumferential dimension is approximately 50-70% of the axial dimension) . According to an example not according to the invention illustrated in Figure 8, the through opening 33 is shaped like a slit (i.e., it has an elongated shape wherein one dimension is greater than the other) and is oriented transversely (circumferentially); as a result, the through opening 33 has a circumferential dimension that is greater than its axial dimension (the circumferential dimension is approximately 40-65% of the axial dimension). In this example not according to the invention the circumferential dimension of the through opening 33 angularly ranges between 30° and 60°.

According to a preferred embodiment illustrated in Figures 2 and 3, the outlet duct 11 has an initial portion that is directly connected to the outlet opening 17 of the tubular body 12, has the same shape (i.e., the same type of cross-section) as the tubular body 12, is coaxial to the tubular body 12, and has an inner diameter D2 that is smaller than the inner diameter D1 of the tubular body 12. In particular, the ratio between the inner diameter D1 of the tubular body 12 and the inner diameter D2 of the initial portion of the outlet duct 11 ranges from 1.2 to 2, and is preferably 1.35.

According to what is illustrated in Figures 12, 13, and 14, the outer electrode 32 (or the outer electrodes 32) of the spark plug 10 is oriented so that it does not block (intercept) the limited part 34 of the fuel spray 27 advancing towards the inner electrode 31. In other words, the outer electrode 32 (or the outer electrodes 32) of the spark plug 10 is oriented so that it does not place the inner electrode 31 in shadow (screen it) in relation to the limited part 34 of the fuel spray 27. As a result, the spark that is generated between the two electrodes 31 and 32 is not in the shadow of (screened by) the outer electrode 32 in relation to the limited part 34 of the fuel spray 27. In Figures 12 and 13, both the parts 34 of the fuel spray 27 that are correctly oriented in relation to the electrode 32 (i.e., which are not screened by the electrode 32) and the parts 34 of the fuel spray 27 that are incorrectly oriented in relation to the electrode 32 (i.e., which are screened by the electrode 32), and, for this reason, are "cancelled" by an "X", are illustrated.

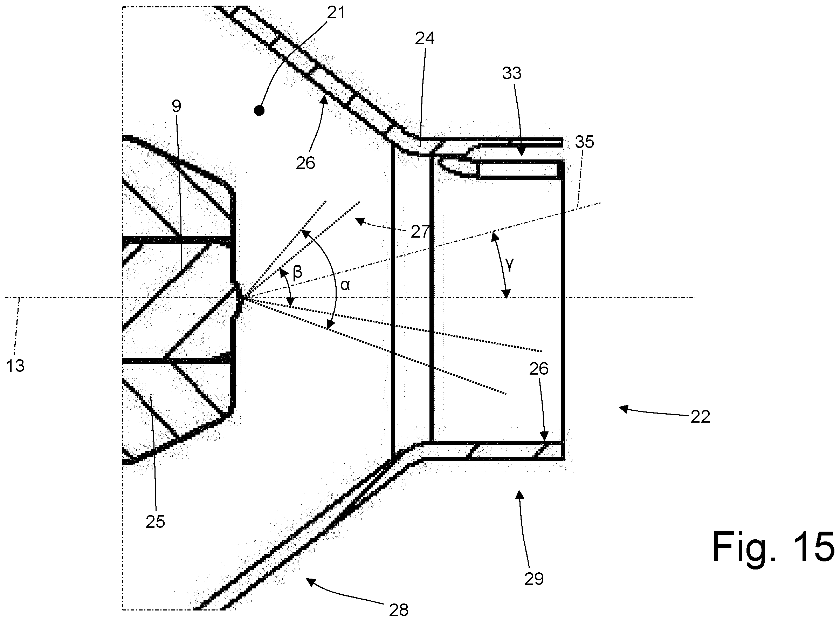

In the embodiments illustrated in Figures 4 and 5, the fuel spray 27 emitted by the fuel injector 9 is perfectly symmetrical in relation to the longitudinal axis 13 of the tubular body 12 (and of the fuel injector 9); in other words, the longitudinal axis 13 of the tubular body 12 coincides with a central symmetry axis 35 of the fuel spray 27. In contrast, in the embodiment illustrated in Figure 15, the fuel spray 27 emitted by the fuel injector 9 is asymmetrical in relation to the longitudinal axis 13 of the tubular body 12 (and of the fuel injector 9) and, thus, the fuel spray 27 is tilted towards the electrodes 31 and 32 of the spark plug 10; in other words, the central symmetry axis 35 of the fuel spray 27 forms an angle γ (other than zero) with the longitudinal axis 13 of the tubular body 12. According to a preferred embodiment, the central symmetry axis 35 of the fuel spray 27 is tilted towards the electrodes 31 and 32 of the spark plug 10 to form the angle γ that has a width ranging between 5° and 20°, preferably approximately 13-15°, with the longitudinal axis 13 of the tubular body 12. Tilting the fuel spray 27 towards the electrodes 31 and 32 of the spark plug 10 makes it possible to create, around the electrodes 31 and 32 of the spark plug 10, a localised excess of fuel (i.e., a locally richer mix) that encourages flame ignition and, thus, encourages the flame's quick propagation to all the rest of the mix.

According to a preferred embodiment, the heating device 6 comprises a control unit 36 (schematically illustrated in Figure 1), which is configured to control the whole operation of the heating device 6, i.e., to drive the fan 8, the injector 9, and the spark plug 10, in a coordinated fashion to achieve, in the most efficient and effective way possible, the desired goal (i.e., to quickly heat the treatment device 5 without damaging the heating device 5 due to excessive temperatures).

According to a possible embodiment illustrated in Figure 1, the heating device 6 comprises a temperature sensor 37 that is arranged along the outlet duct 11 in order to measure the temperature of the hot air flowing through the outlet duct 11. Alternatively, the heating device 6 comprises a temperature sensor 38 that is arranged along the outlet duct 3 downstream of the engagement point of the outlet duct 11 (and upstream of the treatment device 5) in order to measure the temperature of the mix of exhaust gases and hot air flowing through the exhaust duct 3. Generally, there is only one of the two temperature sensors 37 and 38, even if in particular applications there could be both the temperature sensors 37 and 38. The control unit 36 uses the temperature sensor 37 or 38 readings to control (potentially in feedback) the combustion in the combustion chamber 7 so as to quickly heat the treatment device 5 without damaging the treatment device 5 due to excessive temperatures.

The embodiments according to the invention described herein may be combined between them without departing from the scope of protection of this invention.

The heating device 6 described above has numerous advantages.

In the first place, the heating device 6 described above makes it possible to obtain, in all operating conditions (particularly when a large quantity of fuel is injected to develop a large amount of heat), complete combustion of the fuel (i.e., without injecting unburned fuel into the exhaust duct 3) thanks to an optimal mixing between comburent air, injected by the nozzle 22 of the feeding channel 21, and fuel, injected by the fuel injector 9.

In addition, the heating device 6 described above has great thermal power in relation to its overall dimensions; i.e., though it is relatively small, the heating device 6 described above makes it possible to generate great thermal power.

Finally, the heating device 6 described above is simple and inexpensive to produce, since it is composed of few parts with simple shapes that are easy to join via welding and standard assembly.

### REFERENCE NUMBER LIST FOR FIGURES

- 1: exhaust system
- 2: internal combustion engine
- 3: exhaust system
- 4: silencer
- 5: treatment device
- 6: heating device
- 7: combustion chamber
- 8: fan
- 9: fuel injector
- 10: spark plug
- 11: outlet duct
- 12: tubular body
- 13: longitudinal axis
- 14: base wall
- 15: base wall
- 16: side wall
- 17: outlet duct
- 18: inlet opening
- 19: inlet duct
- 20: check valve
- 21: feeding channel
- 22: nozzle
- 23: static mixer
- 24: outer tubular body
- 25: inner tubular body
- 26: inner surface
- 27: fuel spray
- 28: conical portion
- 29: cylindrical portion
- 30: longitudinal axis
- 31: inner electrode
- 32: outer electrode
- 33: through opening
- 34: part
- 35: symmetry axis
- 36: control unit
- 37: temperature sensor
- 38: temperature sensor
- α: angle
- β: angle
- δ: advance angle
- γ: angle
- X: distance
- D1: diameter
- D2: diameter

## Claims

1. A heating device (6) for an exhaust system (1) of an internal combustion engine (2); the heating device (6) comprises:
a tubular body (12), where a combustion chamber (7) is obtained on the inside;
a fuel injector (9), which is mounted through a base wall (14) of the tubular body (12) so as to inject fuel into the combustion chamber (7);
at least one inlet opening (18) which can be connected to a fan (8) so as to receive an air flow which is directed to the combustion chamber (7) and gets mixed with the fuel;
a feeding channel (21), which receives air from the inlet opening (18), surrounds an end portion of the fuel injector (9) and ends with a nozzle (22), which is arranged around an injection point of the fuel injector (9);
a spark plug (10), which is mounted through a side wall (16) of the tubular body (12) so as to trigger the combustion of a mixture of air and fuel and has electrodes (31, 32); and
a static mixer (23), which is shaped like an annulus, is arranged along the feeding channel (21) and around the fuel injector (9) and is configured to generate, in the air flowing towards the nozzle (22), a swirling motion, which has a given direction of rotation around a longitudinal axis (13) of the tubular body (12)
the feeding channel (21) is delimited, on the outside, by an outer tubular body (24) having an inner surface (26) of the feeding channel (21) and is delimited, on the inside, by an inner tubular body (25), which surrounds the fuel injector (9) and contains, on the inside, the fuel injector (9) ;
the heating device (6) is **characterized in that:**
the fuel injector (9) is configured to spray at least part of the fuel against the outer tubular body (24);
the outer tubular body (24) has a through opening (33), through which a limited part (34) of a fuel spray (27) emitted by the fuel injector (9), instead of hitting the outer tubular body (24), flows through the outer tubular body (24) in order to reach the electrodes (31, 32) of the spark plug (10); and
the through opening (33) is circumferentially shifted, in a direction contrary to the air rotation direction imparted by the static mixer (23), relative to an ideal line connecting an injection point of the injector (9) to the electrodes (31, 32) of the spark plug (10).

2. The heating device (6) according to claim 1, wherein a middle plane of the through opening (33) forms, with the ideal line connecting the injection point of the injector (9) to the electrodes (31, 32) of the spark plug (10), an advance angle (δ) other than zero.

3. The heating device (6) according to claim 2, wherein the advance angle (δ) ranges from 5° to 30° and preferably is equal to 15°.

4. The heating device (6) according to claim 1, 2 or 3, wherein the through opening (33) is shaped like a slit and has a circumferential size that is smaller than an axial size.

5. The heating device (6) according to claim 1, 2 or 3, wherein the through opening (33) is shaped like a slit and has a circumferential size that is greater than an axial size.

6. The heating device (6) according to any one of the claims from 1 to 5 and comprising an outlet duct (11) having an initial portion, which is directly connected to an outlet opening (17) of the tubular body (12), is coaxial to the tubular body (12) and has a second diameter (D2), which is smaller than a first diameter (D1) of the tubular body (12).

7. The heating device (6) according to claim 6, wherein the ratio between the first diameter (D1) of the tubular body (12) and the second diameter (D2) of the initial portion of the outlet duct (11) ranges from 1.2 to 2 and preferably is equal to 1.35.

8. The heating device (6) according to any one of the claims from 1 to 7, wherein:
the spark plug (10) has an inner electrode (31) and at least one outer electrode (32); and
the outer electrode (32) is oriented so as not to block the limited part (34) of the fuel spray (27) moving towards the inner electrode (31).

9. The heating device (6) according to any one of the claims from 1 to 8, wherein:
the spark plug (10) has an inner electrode (31) and at least one outer electrode (32); and
the outer electrode (32) is oriented so as not to screen the inner electrode (31) from the limited part (34) of the fuel spray (27).

10. The heating device (6) according to any one of the claims from 1 to 9, wherein the injector (9) is configured to emit a fuel spray (27) having a conical shape hollow at the centre, namely having a cross section shaped like an annulus.

11. The heating device (6) according to claim 10, wherein an outer surface of the fuel spray (27) has an opening angle (α) of approximately 70° and an inner surface of the fuel spray (27) has an opening angle (β) of approximately 50°.

12. The heating device (6) according to any one of the claims from 1 to 11, wherein a fuel spray (27) emitted by the fuel injector (9) is asymmetric relative to the longitudinal axis (13) of the tubular body (12), so that the fuel spray (27) is inclined towards electrodes (31, 32) of the spark plug (10).

13. The heating device (6) according to claim 12, wherein a central symmetry axis (35) of the fuel spray (27) forms, with the longitudinal axis (13) of the tubular body (12), an angle (γ) ranging from 5° to 20°.

14. The heating device (6) according to any one of the claims from 1 to 13, wherein the injector is configured to spray at least 80% of the fuel against the inner surface (26) of the feeding channel (21).

15. The heating device (6) according to any one of the claims from 1 to 14, wherein the fuel injector (9) is of the swirl type and imparts a rotary swirling motion to the fuel.

16. The heating device (6) according to claim 15, wherein:
the fuel injector (9) is of the "swirl" type and imparts a rotary swirling motion to the injected fuel in which fuel rotates around the longitudinal axis (13) of the tubular body (12); and
a direction of rotation around the longitudinal axis (13) of the tubular body (12) of the swirling motion generated by the static mixer (23) is the same as a direction of rotation imparted to the fuel by the "swirl" fuel injector (9) .

17. An exhaust system (1) of an internal combustion engine (2); the exhaust system (1) comprises:
an exhaust duct (3), which originates from an exhaust manifold of the internal combustion engine (2) and ends with a silencer (4), from which exhaust gases are released into the atmosphere;
an exhaust gas treatment device (5), which is arranged along the exhaust duct (3); and
a heating device (6), which is connected to the exhaust duct (3) upstream of the treatment device (5) by means of an outlet duct (11) coming out of the exhaust duct (3), is designed to generate, by burning fuel, a hot air flow and is manufactured according to any one of the claims from 1 to 16.

18. The exhaust system (1) according to claim 17, wherein the heating device (6) comprises:
a temperature sensor (37, 38), which is arranged along the outlet duct (11) or along the exhaust duct (3) downstream of the point in which the outlet duct (11) branches off; and
a control unit (36), which adjusts the combustion in the heating device (6) also depending on the measure provided by the temperature sensor (37, 38).

## Patentansprüche

1. Heizvorrichtung (6) für ein Abgassystem (1) eines Verbrennungsmotors (2); wobei die Heizvorrichtung (6) umfasst:
einen rohrförmigen Körper (12), bei dem auf der Innenseite eine Brennkammer (7) erhalten wird;
ein Kraftstoffeinspritzventil (9), das durch eine Bodenwand (14) des rohrförmigen Körpers (12) hindurch angebracht ist, um Kraftstoff in die Brennkammer (7) einzuspritzen;
mindestens eine Einlassöffnung (18), die mit einem Gebläse (8) verbunden werden kann, um einen Luftstrom zu empfangen, der zur Brennkammer (7) hin gerichtet ist und mit dem Kraftstoff vermischt wird;
einen Zufuhrkanal (21), der Luft von der Einlassöffnung (18) empfängt, einen Endteil des Kraftstoffeinspritzventils (9) umgibt und in einer Düse (22) endet, die um einen Einspritzpunkt des Kraftstoffeinspritzventils (9) herum angeordnet ist;
eine Zündkerze (10), die durch eine Seitenwand (16) des rohrförmigen Körpers (12) hindurch angebracht ist, um die Verbrennung eines Gemischs aus Luft und Kraftstoff auszulösen, und Elektroden (31, 32) hat; und
eine statische Mischeinrichtung (23), die wie ein Ring geformt ist und entlang des Zufuhrkanals (21) und um das Kraftstoffeinspritzventil (9) herum angeordnet und dazu konfiguriert ist, in der zur Düse (22) strömenden Luft eine Wirbelbewegung zu erzeugen, die eine vorgegebene Drehrichtung um eine Längsachse (13) des rohrförmigen Körpers (12) hat;
der Zufuhrkanal (21) auf der Außenseite durch einen äußeren rohrförmigen Körper (24) begrenzt ist, der eine Innenoberfläche (26) des Zufuhrkanals (21) hat, und auf der Innenseite durch einen inneren rohrförmigen Körper (25) begrenzt ist, der das Kraftstoffeinspritzventil (9) umgibt und auf der Innenseite das Kraftstoffeinspritzventil (9) enthält;
die Heizvorrichtung (6) **dadurch gekennzeichnet ist, dass**:
das Kraftstoffeinspritzventil (9) dazu konfiguriert ist, mindestens einen Teil des Kraftstoffs gegen den äußeren rohrförmigen Körper (24) zu spritzen;
der äußere rohrförmige Körper (24) eine Durchgangsöffnung (33) hat, durch die ein begrenzter Teil (34) eines von dem Kraftstoffeinspritzventil (9) abgegebenen Kraftstoffstrahls (27) statt auf den äußeren rohrförmigen Körper (24) zu treffen durch den äußeren rohrförmigen Körper (24) strömt, um die Elektroden (31, 32) der Zündkerze (10) zu erreichen; und
die Durchgangsöffnung (33) in Umkreisrichtung in einer Richtung, die gegen die Luftdrehrichtung verläuft, die von der statischen Mischeinrichtung (23) verliehen wird, relativ zu einer Ideallinie versetzt ist, die einen Einspritzpunkt des Einspritzventils (9) mit den Elektroden (31, 32) der Zündkerze (10) verbindet.

2. Heizvorrichtung (6) gemäß Anspruch 1, wobei eine Mittelebene der Durchgangsöffnung (33) mit der Ideallinie, die den Einspritzpunkt des Einspritzventils (9) mit den Elektroden (31, 32) der Zündkerze (10) verbindet, einen Voreilwinkel (δ) ungleich null einschließt.

3. Heizvorrichtung (6) gemäß Anspruch 2, wobei der Voreilwinkel (δ) in einem Bereich von 5° bis 30° liegt und vorzugsweise gleich 15° ist.

4. Heizvorrichtung (6) gemäß Anspruch 1, 2 oder 3, wobei die Durchgangsöffnung (33) wie ein Schlitz geformt ist und eine Größe in Umfangsrichtung hat, die kleiner als eine axiale Größe ist.

5. Heizvorrichtung (6) gemäß Anspruch 1, 2 oder 3, wobei die Durchgangsöffnung (33) wie ein Schlitz geformt ist und eine Größe in Umfangsrichtung hat, die größer als eine axiale Größe ist.

6. Heizvorrichtung (6) gemäß einem der Ansprüche 1 bis 5 und umfassend einen Auslasskanal (11), der einen Anfangsteil hat, der direkt mit einer Auslassöffnung (17) des rohrförmigen Körpers (12) verbunden ist, mit dem rohrförmigen Körper (12) koaxial ist und einen zweiten Durchmesser (D2) hat, der kleiner als ein erster Durchmesser (D1) des rohrförmigen Körpers (12) ist.

7. Heizvorrichtung (6) gemäß Anspruch 6, wobei das Verhältnis zwischen dem ersten Durchmesser (D1) des rohrförmigen Körpers (12) und dem zweiten Durchmesser (D2) des Anfangsteils des Auslasskanals (11) in einem Bereich von 1,2 bis 2 liegt und vorzugsweise gleich 1,35 ist.

8. Heizvorrichtung (6) gemäß einem der Ansprüche 1 bis 7, wobei:
die Zündkerze (10) eine innere Elektrode (31) und mindestens eine äußere Elektrode (32) hat; und
die äußere Elektrode (32) so ausgerichtet ist, dass sie den begrenzten Teil (34) des Kraftstoffstrahls (27), der sich zur inneren Elektrode (31) hin bewegt, nicht blockiert.

9. Heizvorrichtung (6) gemäß einem der Ansprüche 1 bis 8, wobei:
die Zündkerze (10) eine innere Elektrode (31) und mindestens eine äußere Elektrode (32) hat; und
die äußere Elektrode (32) so ausgerichtet ist, dass sie die innere Elektrode (31) gegenüber dem begrenzten Teil (34) des Kraftstoffstrahls (27) nicht abschirmt.

10. Heizvorrichtung (6) gemäß einem der Ansprüche 1 bis 9, wobei das Einspritzventil (9) dazu konfiguriert ist, einen Kraftstoffstrahl (27) abzugeben, der eine kegelige Form hat, die in der Mitte hohl ist, nämlich einen Querschnitt hat, der wie ein Ring geformt ist.

11. Heizvorrichtung (6) gemäß Anspruch 10, wobei eine Außenoberfläche des Kraftstoffstrahls (27) einen Öffnungswinkel (α) von ungefähr 70° hat und eine Innenoberfläche des Kraftstoffstrahls (27) einen Öffnungswinkel (β) von ungefähr 50° hat.

12. Heizvorrichtung (6) gemäß einem der Ansprüche 1 bis 11, wobei ein von dem Kraftstoffeinspritzventil (9) abgegebener Kraftstoffstrahl (27) relativ zur Längsachse (13) des rohrförmigen Körpers (12) asymmetrisch ist, sodass der Kraftstoffstrahl (27) zu den Elektroden (31, 32) der Zündkerze (10) hin geneigt ist.

13. Heizvorrichtung (6) gemäß Anspruch 12, wobei eine mittige Symmetrieachse (35) des Kraftstoffstrahls (27) mit der Längsachse (13) des rohrförmigen Körpers (12) einen Winkel (γ) einschließt, der in einem Bereich von 5° bis 20° liegt.

14. Heizvorrichtung (6) gemäß einem der Ansprüche 1 bis 13, wobei das Einspritzventil dazu konfiguriert ist, mindestens 80% des Kraftstoffs gegen die Innenoberfläche (26) des Zufuhrkanals (21) zu spritzen.

15. Heizvorrichtung (6) gemäß einem der Ansprüche 1 bis 14, wobei das Kraftstoffeinspritzventil (9) des verwirbelnden Typs ist und den Kraftstoff in eine drehende Wirbelbewegung versetzt.

16. Heizvorrichtung (6) gemäß Anspruch 15, wobei:
das Kraftstoffeinspritzventil (9) des "verwirbelnden" Typs ist und den eingespritzten Kraftstoff in eine drehende Wirbelbewegung versetzt, wobei sich der Kraftstoff um die Längsachse (13) des rohrförmigen Körpers (12) dreht; und
eine Drehrichtung um die Längsachse (13) des rohrförmigen Körpers (12) der von der statischen Mischeinrichtung (23) erzeugten Wirbelbewegung gleich der Drehrichtung ist, in die der Kraftstoff von dem "verwirbelnden" Kraftstoffeinspritzventil (9) in Drehung versetzt wird.

17. Abgassystem (1) eines Verbrennungsmotors (2); wobei das Abgassystem (1) umfasst:
ein Abgasrohr (3), das von einem Abgaskrümmer des Verbrennungsmotors (2) ausgeht und in einem Schalldämpfer (4) endet, aus dem Abgase in die Atmosphäre entlassen werden;
eine Abgasnachbehandlungseinrichtung (5), die entlang dem Abgasrohr (3) angeordnet ist; und
eine Heizvorrichtung (6), die mit dem Abgasrohr (3) mittels eines Auslassrohrs (11), das aus dem Abgasrohr (3) herauskommt, stromaufwärts von der Abgasnachbehandlungseinrichtung (5) verbunden ist, dazu ausgelegt ist, durch das Verbrennen von Kraftstoff einen warmen Luftstrom zu erzeugen, und gemäß einem der Ansprüche 1 bis 16 hergestellt ist.

18. Abgassystem (1) gemäß Anspruch 17, wobei die Heizvorrichtung (6) umfasst:
einen Temperatursensor (37, 38), der entlang dem Auslassrohr (11) oder entlang dem Abgasrohr (3) stromabwärts von dem Punkt angeordnet ist, an dem das Auslassrohr (11) abzweigt; und
eine Steuereinheit (36), die die Verbrennung in der Heizvorrichtung (6) auch in Abhängigkeit von dem Messwert einstellt, der von dem Temperatursensor (37, 38) geliefert wird.

## Revendications

1. Dispositif de chauffage (6) pour un système d'échappement (1) d'un moteur à combustion interne (2) ; le dispositif de chauffage (6) comprend :
un corps tubulaire (12), où une chambre de combustion (7) est obtenue sur l'intérieur ;
un injecteur (9) de carburant, qui est monté à travers une paroi de base (14) du corps tubulaire (12) de façon à injecter du carburant dans la chambre de combustion (7) ;
au moins une ouverture d'admission (18) qui peut être reliée à un ventilateur (8) de façon à recevoir un écoulement d'air qui est dirigé vers la chambre de combustion (7) et se retrouve mélangé au carburant ;
un canal d'alimentation (21), qui reçoit de l'air à partir de l'ouverture d'admission (18), entoure une portion d'extrémité de l'injecteur (9) de carburant et se termine par une buse (22), qui est agencée autour d'un point d'injection de l'injecteur (9) de carburant ;
une bougie d'allumage (10), qui est montée à travers une paroi latérale (16) du corps tubulaire (12) de façon à déclencher la combustion d'un mélange d'air et de carburant et a des électrodes (31, 32) ; et
un mélangeur statique (23), qui a une forme d'anneau, est agencé le long du canal d'alimentation (21) et autour de l'injecteur (9) de carburant et est configuré pour générer, dans l'air s'écoulant vers la buse (22), un mouvement tourbillonnant, qui a une direction de rotation donnée autour d'un axe longitudinal (13) du corps tubulaire (12) ;
le canal d'alimentation (21) est délimité, sur l'extérieur, par un corps tubulaire externe (24) ayant une surface interne (26) du canal d'alimentation (21) et est délimité, sur l'intérieur, par un corps tubulaire interne (25), qui entoure l'injecteur (9) de carburant et contient, sur l'intérieur, l'injecteur (9) de carburant ;
le dispositif de chauffage (6) est **caractérisé en ce que** :
l'injecteur (9) de carburant est configuré pour pulvériser au moins une partie du carburant contre le corps tubulaire externe (24) ;
le corps tubulaire externe (24) a une ouverture traversante (33), à travers laquelle une partie limitée (34) d'une pulvérisation de carburant (27) émise par l'injecteur (9) de carburant, au lieu de frapper le corps tubulaire externe (24), s'écoule à travers le corps tubulaire externe (24) afin d'atteindre les électrodes (31, 32) de la bougie d'allumage (10) ; et
l'ouverture traversante (33) est décalée de manière circonférentielle, dans une direction contraire à la direction de rotation d'air conférée par le mélangeur statique (23), par rapport à une ligne idéale reliant un point d'injection de l'injecteur (9) aux électrodes (31, 32) de la bougie d'allumage (10).

2. Dispositif de chauffage (6) selon la revendication 1, dans lequel un plan intermédiaire de l'ouverture traversante (33) forme, avec la ligne idéale reliant le point d'injection de l'injecteur (9) aux électrodes (31, 32) de la bougie d'allumage (10), un angle d'avance (δ) autre que zéro.

3. Dispositif de chauffage (6) selon la revendication 2, dans lequel l'angle d'avance (δ) va de 5° à 30° et de préférence est égal à 15°.

4. Dispositif de chauffage (6) selon la revendication 1, 2 ou 3, dans lequel l'ouverture traversante (33) a une forme de fente et a une taille circonférentielle qui est plus petite qu'une taille axiale.

5. Dispositif de chauffage (6) selon la revendication 1, 2 ou 3, dans lequel l'ouverture traversante (33) a une forme de fente et a une taille circonférentielle qui est plus grande qu'une taille axiale.

6. Dispositif de chauffage (6) selon l'une quelconque des revendications 1 à 5 et comprenant un conduit d'évacuation (11) ayant une portion initiale, qui est reliée directement à une ouverture d'évacuation (17) du corps tubulaire (12), est coaxiale avec le corps tubulaire (12) et a un deuxième diamètre (D2), qui est plus petit qu'un premier diamètre (D1) du corps tubulaire (12) .

7. Dispositif de chauffage (6) selon la revendication 6, dans lequel le rapport entre le premier diamètre (D1) du corps tubulaire (12) et le deuxième diamètre (D2) de la portion initiale du conduit d'évacuation (11) va de 1,2 à 2 et de préférence est égal à 1,35.

8. Dispositif de chauffage (6) selon l'une quelconque des revendications 1 à 7, dans lequel :
la bougie d'allumage (10) a une électrode interne (31) et au moins une électrode externe (32) ; et
l'électrode externe (32) est orientée de façon à ne pas bloquer la partie limitée (34) de la pulvérisation de carburant (27) se déplaçant vers l'électrode interne (31) .

9. Dispositif de chauffage (6) selon l'une quelconque des revendications 1 à 8, dans lequel :
la bougie d'allumage (10) a une électrode interne (31) et au moins une électrode externe (32) ; et
l'électrode externe (32) est orientée de façon à ne pas protéger l'électrode interne (31) de la partie limitée (34) de la pulvérisation de carburant (27).

10. Dispositif de chauffage (6) selon l'une quelconque des revendications 1 à 9, dans lequel l'injecteur (9) est configuré pour émettre une pulvérisation de carburant (27) ayant une forme conique creuse au centre, à savoir ayant une coupe transversale ayant une forme d'anneau.

11. Dispositif de chauffage (6) selon la revendication 10, dans lequel une surface externe de la pulvérisation de carburant (27) a un angle d'ouverture (α) d'environ 70° et une surface interne de la pulvérisation de carburant (27) a un angle d'ouverture (β) d'environ 50°.

12. Dispositif de chauffage (6) selon l'une quelconque des revendications 1 à 11, dans lequel une pulvérisation de carburant (27) émise par l'injecteur (9) de carburant est asymétrique par rapport à l'axe longitudinal (13) du corps tubulaire (12), de façon à ce que la pulvérisation de carburant (27) soit inclinée vers les électrodes (31, 32) de la bougie d'allumage (10) .

13. Dispositif de chauffage (6) selon la revendication 12, dans lequel un axe de symétrie central (35) de la pulvérisation de carburant (27) forme, avec l'axe longitudinal (13) du corps tubulaire (12), un angle (γ) allant de 5° à 20°.

14. Dispositif de chauffage (6) selon l'une quelconque des revendications 1 à 13, dans lequel l'injecteur est configuré pour pulvériser au moins 80 % du carburant contre la surface interne (26) du canal d'alimentation (21).

15. Dispositif de chauffage (6) selon l'une quelconque des revendications 1 à 14, dans lequel l'injecteur (9) de carburant est du type à tourbillon et confère un mouvement tourbillonnant rotatif au carburant.

16. Dispositif de chauffage (6) selon la revendication 15, dans lequel :
l'injecteur (9) de carburant est du type « à tourbillon » et confère un mouvement tourbillonnant rotatif au carburant injecté dans lequel du carburant tourne autour de l'axe longitudinal (13) du corps tubulaire (12) ; et
une direction de rotation autour de l'axe longitudinal (13) du corps tubulaire (12) du mouvement tourbillonnant généré par le mélangeur statique (23) est la même qu'une direction de rotation conférée au carburant par l'injecteur (9) de carburant « à tourbillon ».

17. Système d'échappement (1) d'un moteur à combustion interne (2) ; le système d'échappement (1) comprend :
un conduit d'échappement (3), qui provient d'un collecteur d'échappement du moteur à combustion interne (2) et se termine par un silencieux (4), à partir duquel des gaz d'échappement sont libérés dans l'atmosphère ;
un dispositif de traitement (5) de gaz d'échappement, qui est agencé le long du conduit d'échappement (3) ; et
un dispositif de chauffage (6), qui est relié au conduit d'échappement (3) en amont du dispositif de traitement (5) au moyen d'un conduit d'évacuation (11) sortant du conduit d'échappement (3), est conçu pour générer, en brûlant du carburant, un écoulement d'air chaud et est fabriqué selon l'une quelconque des revendications 1 à 16.

18. Système d'échappement (1) selon la revendication 17, dans lequel le dispositif de chauffage (6) comprend :
un capteur de température (37, 38), qui est agencé le long du conduit d'évacuation (11) ou le long du conduit d'échappement (3) en aval du point au niveau duquel le conduit d'évacuation (11) bifurque ; et
une unité de commande (36), qui ajuste la combustion dans le dispositif de chauffage (6) également en fonction de la mesure fournie par le capteur de température (37, 38) .
